# EUROPEAN PATENT APPLICATION

(11) **EP 4 773 098 A1**
(43) Date of publication of application: **08.07.2026**
(21) Application number: 25305007.4
(22) Date of filing: 03.01.2025
(51) Int. Cl.: G06V 10/82, G06V 20/70

(54) **SYSTEM AND METHOD FOR EFFICIENT ONLINE ADAPTATION OF IMAGE SEGMENTATION MODELS**

(71) Applicant: THALES, 92190 Meudon (FR)
(72) Inventor: Chiaroni, Florent, Pierre-Jacques, QUÉBEC, QC G1P 4P5 (CA); Ahmad, Ola, QUÉBEC, QC G1P 4P5 (CA); BAULIER, Victor, 33700 MERIGNAC (FR)
(74) Representative: Lavoix

(57) **Abstract**

The present invention discloses a computer-implemented method for image segmentation of an input image of a target domain, the method comprising:
- an inference phase to output an image segmentation mask of the input image, the inference phase comprising at least an encoding step performed by a pre-trained encoder, and a classification step performed by a few-shot classifier operating a few-shot model, the few-shot model being trained during a training phase on a set of source labeled images;
- an adaptation phase to adapt the few-shot model online during the inference phase, the adaptation using a set of mixed-up images obtained by combining selected input images of the target domain coarsely annotated with labeled images of the source domain.

## Description

### TECHNICAL FIELD

The present invention relates to the technical field of Artificial Intelligence (Al), more particularly relates to computer vision and robust machine learning for resource constrained autonomous and semi-autonomous systems.

### BACKGROUND

In the context of embodied perception, e.g. real-time obstacle detection from an Unmanned Aerial Vehicle (UAV), a common solution to identify obstacles automatically in real-time, is to use a camera sensor, connected to an embedded computer. This latter incorporates a computer vision algorithm and to output the location of the obstacle(s) of interest on each recorded frame to analyze. An accurate manner to locate the obstacles in a given image is to highlight them in the image at the pixel-level, which refers to an image segmentation task which is a fundamental task for robot scene understanding, safe navigation including obstacle avoidance, and numerous other robotic applications.

Image segmentation generally realized with machine learning techniques involves assigning a label to each pixel in an image that corresponds to objects of interest. Such machine-learning model providing satisfying segmentation prediction performances is generally composed of a deep neural network architecture that requires a training in a supervised manner, on a large amount of annotated data containing several instances of the obstacle of interest. In addition, it is generally required that these data correspond to the domain of interest. For example, a domain can refer to images captured with a fisheye camera in a rural environment.

In real-world systems, such as autonomous robots, obtaining high-quality annotations from large datasets, is often impractical due to the significant costs associated with human annotation and data collection. These processes are both time-consuming and expensive, making it challenging to gather the labeled data necessary for training the models.

Few-shot learning are techniques that are particularly valuable in robotics applications as they significantly reduce the cost and effort involved in manual labeling, and because it allows robots to perform complex tasks with minimal training data.

The following references provide several approaches of few-shot methods.

Few-shot learning methods (FSL) address the challenge of learning new tasks with a few training samples, by transferring the general knowledge learned through large datasets to novel tasks. Meta-learning is one of the common techniques in FSL, where an ML model is trained on how to learn from only a few samples. The article of J. Snell, K. Swersky, and R. Zemel, "Prototypical networks for few-shot learning," Advances in neural information processing systems, vol. 30, 2017, describes ProtoNet one of the most commonly used meta-learning techniques, which leverages the prototypes (mean feature vectors) to perform nearest neighbor classification. Later works in FSL showed that meta-learning does not generalize well to new tasks that might be different from base training data. Simply using frozen pre-trained feature extractors and linear or prototypical classifiers lead to much better generalizability, robustness, and overall performance.

Few-shot segmentation (FSS) techniques consider the challenge of segmenting new images while learning from only a few training examples. Similar to few-shot classification, a significant number of works in FSS are prototypical learning methods. Inspired by ProtoNet, several FSS methods consolidate the support set information into a single or multiple prototypes followed by feature comparison or aggregation. In most prototype-based methods, segmentation is performed by pixel-wise classification, where each pixel is classified as background or foreground based on the distance between the prototypes and the feature vector associated with the pixel, whereas some develop adaptive classifiers with prototypes serving as the initial weights of the classifier. While these techniques are effective, they require pixel-level annotations, which remain highly costly and time-consuming, particularly in real-time robotic applications.

Instead of relying on strongly labelled pixel-level annotations, weakly-supervised few-shot segmentation (WSFSS) leverages weaker labels, including bounding boxes or scribbles (such as described in the article of B. Han and T.-H. Oh, "Learning few-shot segmentation from bounding box annotations," in Proceedings of the IEEE/CVF Winter Conference on Applications of Computer Vision, 2023, pp. 3750-3759), image-level class labels, word embeddings combined with image-level class labels. WSFSS methods that depend on image-level class labels have proven less effective at segmenting novel objects, especially when test images contain base classes from the support set. In addition, they often provide inaccurate segmentation when dealing with complex backgrounds. Moreover, many WSFSS methods use meta-learning techniques and require a large number of segmentation masks during meta-training, making them less efficient.

US 2024/0144652 A1 from Bojie MA et al. describes a data augmentation method for a computer vision task using a *mixup* technique combined with few-shot learning. The authors proposed a variant of the basic *mixup* technique as they use saliency-guided mixing and image rearrangements. This technique consists of maximizing the saliency of the generated image. They generate image-level labels such that their approach can only deal with the image classification task.

*mixup* technique has been introduced by H. Zhang, ("mixup: Beyond empirical risk minimization," arXiv preprint arXiv:1710.09412, 2017) for image classification problems. It is a data augmentation technique that creates new training samples by blending pairs of examples and their labels, which smooths decision boundaries and improves model generalization. This method enhances performance and robustness by encouraging the model to behave more linearly between examples, reducing overfitting. With this original technique, two annotated images of the same domain are mixed. The labels are blended using a weighted average of the original labels from the two selected examples.

Some other related work extends the original *mixup* strategy to the image segmentation problem such as in the article of M. A. Islam, M. Kowal, K. G. Derpanis, and N. D. B. Bruce, "SegMix: Co-occurrence Driven Mixup for Semantic Segmentation and Adversarial Robustness," IJCV, vol. 131, no. 3, pp. 701-716, Mar. 2023, doi: 10.1007/s11263-022-01720-7. The article of Z. Zhou, L. Qi, and Y. Shi, "Generalizable Medical Image Segmentation via Random Amplitude Mixup and Domain-Specific Image Restoration," in Computer Vision - ECCV 2022, vol. 13681, S. Avidan, G. Brostow, M. Cissé, G. M. Farinella, and T. Hassner, Eds., in Lecture Notes in Computer Science, vol. 13681. , Cham: Springer Nature Switzerland, 2022, pp. 420-436. doi: 10.1007/978-3-031-19803-8_25, introduced the Random Amplitude mixup module (RAM) to address the domain generalization problem on medical image segmentation tasks. Here, the addressed domain generalization challenge consists of assuming that only data from diverse source domains are accessible, but there is no access to any data of the target domain. The module RAM incorporates low-level frequency information of different domain images to synthesize new images.

In the article of D. Kim et al., "Bidirectional domain mixup for domain adaptive semantic segmentation," in Proceedings of the AAAI Conference on Artificial Intelligence, 2023, pp. 1114-1123, https://ojs.aaai.org/index.php/AAAl/article/view/25193, the unsupervised domain adaptation challenge is addressed, i.e. where only data of the source domain are annotated. The approach consists of blending image patches between two domains (source and target) in both directions. To do so, the method generates pseudo labels from the unlabeled target domain during training and combines them with labeled source domain data to perform domain *mixup.*

In US 2024/0331371 A1, a *mixup* technique is used to align the parameters of a teacher model with a student model by using a parameter share circuitry, a knowledge alignment circuitry, and a self-distillation circuitry.

US 11308353 B2 describes a method for training neural networks to classify digital images in few-shot learning tasks. It leverages a combination of self-supervision and manifold *mixup* regularization to enhance the model's ability to generalize from a small number of labeled examples. The manifold *mixup* regularization operation extends the original *mixup* strategy by interpolating between the hidden layer representations of two examples in a neural network, rather than blending the input images directly.

In US 2023/0162023 A1, a machine learning model is trained using standard machine learning techniques enhanced by data augmentation, including *mixup* and domain adaptation. Although the patent refers to few-shot learning, it uses data augmentation strategies to simulate a few-shot learning environment by generating diverse training examples from limited labeled data

The existing solutions are not satisfactory for at least the key reasons of limited efficiency, limited performance and lack of generalization capacity.

Most of the known solutions overlook operational constraints of the system and focus solely on how increasing the performance of the segmentation task on training data or during test time while enough pixel-level annotations are available. Furthermore, most existing solutions require multiple parameters fine-tuning, they are not parameter-free, making them impractical for efficient (online) adaptation.

As regard to limited performance, those existing solutions utilizing coarse annotations often lack accuracy because they fail to account for background complexity in their training or fine-tuning strategies. For a given semantic segmentation task for which a segmentation model specifically trained for this task is needed, one may have access to only a few coarsely annotated data from source domains, meanwhile, only a few data from the target domain are accessible.

Furthermore, data from a target domain are generally only accessible during deployment, implying to adapt directly the segmentation model on the fly. In practice, it is not always possible to have access in advance, i.e. offline, before the application time, to such rich data from a target domain. A solution to this problem could be thus to train or adapt the segmentation model on the data acquired and annotated online, during the application time or operation. However, it is noteworthy that several constraints must be considered in this scenario: (I) Training a segmentation model can be computational demanding. (II) Manual data annotation at the pixel-level is time consuming. (III) The data to annotate must contain a sufficiently large number of diverse examples from the class(es) of interest. The first two points may not comply with online constraint, meanwhile, the latter implies to encounter as soon as possible during the operation a large number of examples of the class of interest, which is impractical and highly dependent on the application scenario.

Furthermore, adaptation during deployment with coarse type of annotations is challenging for most existing methods, since only few (i.e. 2 to 5) coarsely annotated source domain data are available to fine-tune models while considering operational constraints. Furthermore, target or application data may include new classes of objects, which are not labeled. This requires then including domain adaptation strategy while training on source domain.

For example, in the context of obstacle detection from drones, one wants to detect some specific obstacles accurately, at the pixel level. However, in some situations, the domain encountered during operation is likely to be different from the domain seen at the training time. This domain shift may decrease the segmentation model performance on this new, unseen, target domain.

Therefore, there is a need for finding a solution to address the problem of efficient coarse few-shot domain adaptation for semantic segmentation.

Finally, existing methods focus on one challenge at a time, i.e., either domain adaptation or few-shot fine-tuning.

There is then a need for a solution, which address the drawbacks of the existing solutions, and which enables an efficient adaptation of a segmentation model during operational context, when a few coarsely annotated data from a source domain and a few data from a target domain that do not contain any apparent obstacle are available.

### SUMMARY

The present invention offers an innovative solution that enables to efficiently train a segmentation model or adapt it on the application time, when having access to only a few coarsely annotated data that do not require direct observation of the obstacles of interest in the target domain.

An object of the present invention is a simple prototype-based few-shot segmentation method that is more robust and computationally efficient than prior art solutions, does not rely on meta-learning, and requires only bounding-box annotations instead of pixelwise segmentation masks.

Advantageously, the present invention allows enhancing performance, robustness and learning efficiency of an image segmentation task, taking into account the challenging operational environment in which a perception system is deployed.

In contrast with prior art *mixup* techniques, the present invention preserves entirely the annotations corresponding to a source image. Furthermore, the interactive *mixup* procedure of the invention avoids cutting or mixing specific patches and instead operates on entire images without relying on pseudo-labeling for target data.

Furthermore, as mentioned in the prior art article of H. Zhang: "While generalizing *mixup* to regression problems is straightforward, its application to structured prediction problems such as image segmentation remains less obvious". In contrast, the present invention is instead particularly appropriate for the image segmentation task. In addition, a novel adaptation procedure allows exploiting images of a target domain that do not contain class of interest.

Advantageously, the method of the present invention allows combining interactively data of a target domain with data from available source domain.

Advantageously, the method of the invention does not perform Fourier transform to obtain a frequency space signal of mixed images.

The present invention provides a solution for the image segmentation task, and is generally composed of a few-shot learning algorithm able to efficiently adapt and generalize to unseen target data, using minimal resources as it is applied on top of a pre-trained deep neural network feature extractor.

*A mixup* operation is performed in the image space, and the few-shot learning algorithm uses a mixture of background prototypes to better deal with the background complexity in the context of image segmentation tasks.

Specifically, the present invention provides a novel weakly supervised few-shot segmentation approach that requires only bounding-box annotations, significantly reducing the annotation burden, and that allows a segmentation model to adapt quickly to new objects or environments. The novel prototype-based few-shot learning algorithm is combined with a *mixup* strategy that does not perform any interpolation of the segmentation labels, neither for source data nor for target data.

The present invention uses an efficient prototype-based technique and models a background class as a mixture of distributions, enabling better handling of complex background variations, and improving performance in difficult settings.

Generally, the system of the present invention comprises three main functional components. A first component is a feature extractor module which is pre-trained offline and fixed online; the second component is a module performing a robust few-shot learning algorithm and that can be trained efficiently, directly during the application time using only data generated with a third component which is a module performing an interactive *mixup* procedure.

The first component (pre-trained feature extractor) is tailored for image segmentation tasks, and is specifically an image encoder that generates latent representations with spatial organization corresponding to the structure of an input image.

The second component (efficient prototype-mixture linear classifier) is plugged on top of the feature extractor. It is a robust few-shot classifier that only requires a few training iterations and that can deal with only a few bounding-box annotations (coarse annotations).

The third component (interactive *mixup* module) allows generating annotated data, mixing a few annotated data from source domains with a few data from a target domain. Target domain data can be interactively and coarsely annotated by a human, either with coarse bounding boxes when obstacles of interest are encountered, or simply as background scenes if no obstacles of interest.

The present invention can be used in wide range of industrial applications that require real-time image data processing and pixel-level tasks such as (semi-)autonomous drones, autonomous vehicles, surveillance and industrial inspection systems. It can be used in wide robotics applications to improve robot scene understanding, safe navigation using robust obstacle detection and avoidance system.

Some applications that can benefit the implementation of the present invention are for Aerial vehicles, Unmanned Aerial Vehicles (UAVs), and more broadly, for mobile robotics, embodied Al, or any system that requires efficient domain adaptation during deployment for any image segmentation task.

One key use case for the system is adapting a model to unfamiliar environments, either to fine-tune it for a specific domain or to broaden its applicability in scenarios with limited data or complex labeling tasks.

The invention may be used in the aerospace and defence domains, such as in applications of efficient computer vision system for performing pixel-level segmentation task, using thermal, visible, or radar sensors, or in applications of obstacle detection and image segmentation algorithms integrated into autonomous drones and vehicles, which need to be efficient and real-time adaptable.

Autonomous agents that collaborate to achieve specific tasks need to have embodied segmentation model to achieve specific goals. One can leverage this approach in autonomous and semi-autonomous systems, enabling, for example, an aircraft equipped with an embedded EDGE device to adapt its model to the unique characteristics of its operating environment. This allows for efficient specialization within a specific domain, while minimizing human effort required for labeling and training data.

By deploying this method across an aircraft/robot fleet, one can shift from traditional group normalization to individualized specialization, enabling the use of more efficient, lightweight models tailored to each specific system.

To achieve the foregoing, a system, method and computer program product are provided in the appended claims.

Further aspects of the invention will now be described, by way of preferred implementations and examples, with reference to the accompanying figures.

### BRIEF DESCRIPTION OF THE FIGURES

The above and other items, features and advantages of the invention will be better understood by reading the following particular description of the invention in conjunction with the figures wherein:
Fig. 1 shows an example of a general system for implementing the method of the present invention;
Fig. 2 depicts an example of a flow chart for performing an image segmentation according to an embodiment of the present invention;
Fig. 3 depicts an example of a flow chart for performing an iterative interactive *mixup* operation in accordance with an embodiment of the present invention;
Fig. 4 depicts an example of a flow chart for performing a few-shot process during learning phase in accordance with an embodiment of the present invention;
Fig. 5 depicts an example of a flow chart for performing a few-shot process during inference phase in accordance with an embodiment of the present invention.

### DETAILED DESCRIPTION

In the context of the present invention, each of the following terms may be used with the corresponding definition:
- Few-shot learning: a machine learning approach where a model is trained to make accurate predictions using only a small number of labeled examples.
- Semantic segmentation: a task for predicting a semantic class of each pixel in an input image using a learning model.
- Domain: refers to a specific dataset or environment characterized by a particular distribution of data.
- Source domain: domain for training a model, a neural network.
- Target domain: domain of interest during an operational phase.
- Unsupervised domain adaptation: involves transferring knowledge from a labeled source domain to an unlabeled target domain, where data distributions between the two domains differ.
- Domain shift: refers to a distribution shift between two domains. Domain shift generally provokes performance degradation of a model when it is applied to data from a distribution different from the one it was trained on.
- Latent space: refers to an internal representation of an input image created by an encoder; the encoder is also referred to as a feature extractor, a deep neural network pre-trained offline, and fixed online on the application time; the encoder allows capturing meaningful features (such as edges, textures, or object parts) in a high-dimensional space that is not directly visible or interpretable, but that retains the essential information needed for further processing.
- Background prototype: a mean prototype vector, computed in the latent space, and representing a background class (i.e., all regions not belonging to a class of interest).
- Foreground prototype: a mean prototype vector, computed in the latent space, that represents a foreground class (i.e., a class of interest).

Methods and systems disclosed herein allow for more efficient and more accurate adaptation of segmentation model during deployment than existing state-of-the-art methods when dealing with coarse annotations. The method disclosed is a parameter-free technique that does not require any hyper-parameter tuning, thereby facilitating online applications.

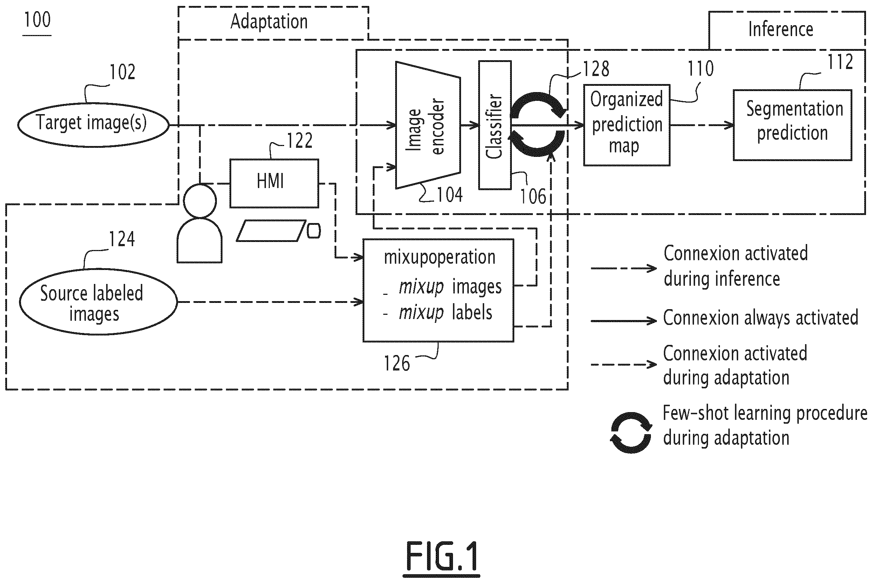

Going first to figure 1, an example of a general system 100 for implementing the method of the present invention is now described.

The system involves components configured for operating an inference phase (i.e. a deployment) and for performing an adaptation phase during the deployment.

The overall components for a deployment phase 100 are mainly an image receiving module 102 coupled to an image encoding module 104, a linear classifier 106, a prediction map convertor module 110, a segmentation mask generator module 110.

The overall components for an adaptation phase are mainly a Human Machine Interface (HMI) 122, a source labeled images module 124, a *mixup* operation module 126.

Figure 1 also shows an arrow circle 128 to illustrate a prototype-based few-shot learning algorithm that is performed at the classifier during both the inference phase and the adaptation phase as further detailed.

Figure 1 further shows with different labeled lines the various interactions between the components to illustrate connexions that are activating during inference, connexions that are always activated, connexions that are activated during adaptation.

The image receiving module 102 is configured to capture and provide images data of a target domain, i.e. target images or target data or target camera frame. The target images are unlabeled images captured by a camera mounted for example on a drone that flies over a target domain. The camera may be a fish-eye camera or a wide-angle camera providing high-resolution images.

The image encoder 104 is a feature extractor component that is a pre-trained model, for example a model trained on general segmentation tasks, such as Transformer-based or CNN-based architectures. The image encoder may also be any feature extractor model trained offline on sufficiently large and diverse industrial dataset that represent an application of interest and that is used as a feature extractor during a deployment phase.

The classifier 106 is coupled to the output of the feature extractor 104 and is operated with the few-shot learning algorithm 128.

The output of the classifier is input to the prediction map convertor module 110 to generate a spatially organized two-dimensional prediction map which is resized by the segmentation mask generator module 112.

The Human Machine Interface (HMI) 122 is configured for allowing an operator to determine if an adaptation of the few-shot algorithm is required.

The source labeled images module 124 is a database of a plurality of annotated images from one or several source domains.

The *mixup* operation module 126 allows combining source labeled images and selected target images from a set of target images captured online or recorded for training, to generate *mixup* data that can be used to adapt or to train the few-shot learning algorithm 128.

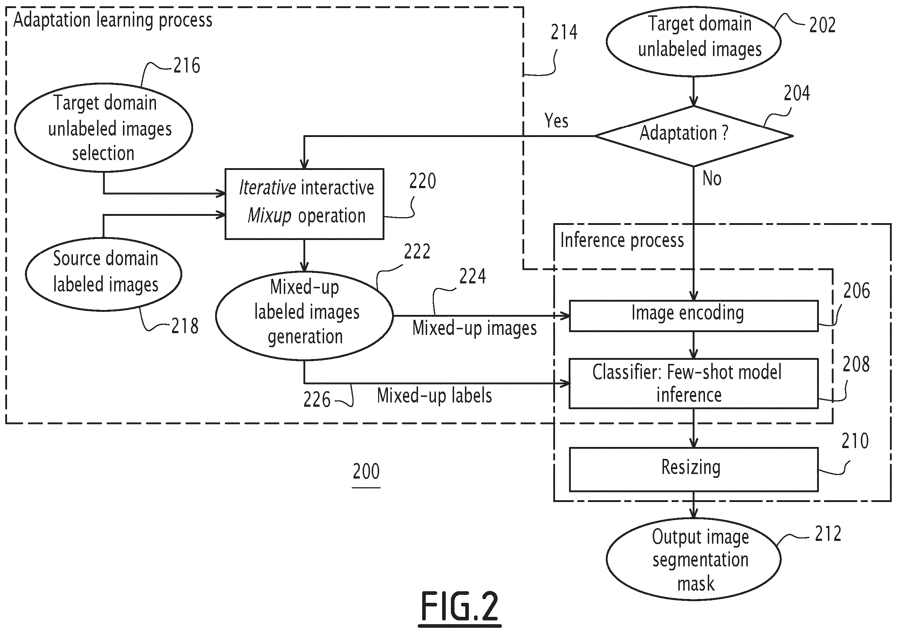

The interaction between the components of the system of figure 1 are now described with reference to figure 2, which shows the main steps 200 of a process for performing an image segmentation during a deployment phase according to an embodiment of the present invention.

The method of the present invention may be implemented as a segmentation computer program that combines a novel efficient and robust few-shot segmentation algorithm, with an iterative interactive *mixup* technique specifically designed for domain adaptation during deployment time.

Advantageously, the adaptation procedure only requires access to a few source domain data that contain annotated instances of a class of interest, and a few data from a target domain.

The method begins with a step 202 of acquiring or receiving a set of unlabeled images from a target domain.

On a next step 204, the process allows determining if an adaptation of the few-shot learning algorithm is required or not. At operation time, the system can transfer iteratively to a human operator, through a human-machine interface, a few unlabeled images of a currently observed target domain (or environment) recorded on-line.

In case no adaptation is required (branch no), the process may continue performing an inference by: providing on step 206 the target unlabeled images to an image encoder for features extraction; classifying on step 208 the results with the current version of the few-shot model (the few-shot model being trained during a training phase on a set of source labeled images); and resizing on step 210 the feature maps to output on next step 212 an image segmentation mask matching the size of the input image of the target domain.

Back on step 204, if an adaptation is required, the process enters an adaptation learning process 214 that allows an iterative interactive training of the few-shot model during deployment.

The user may visualize on an HMI, the received target unlabeled images to select a set of target domain unlabeled images 216, depending on their relevance for the target deployment task.

In an embodiment, the adaptation may be required for instance, if an unlabeled image contains the predefined class of interest but is not correctly segmented by the current few-shot model. Similarly, if an image contains a challenging background that the model struggles with or that is not represented in a labeled dataset, it is considered relevant to retain this image for further learning using the *mixup* operation.

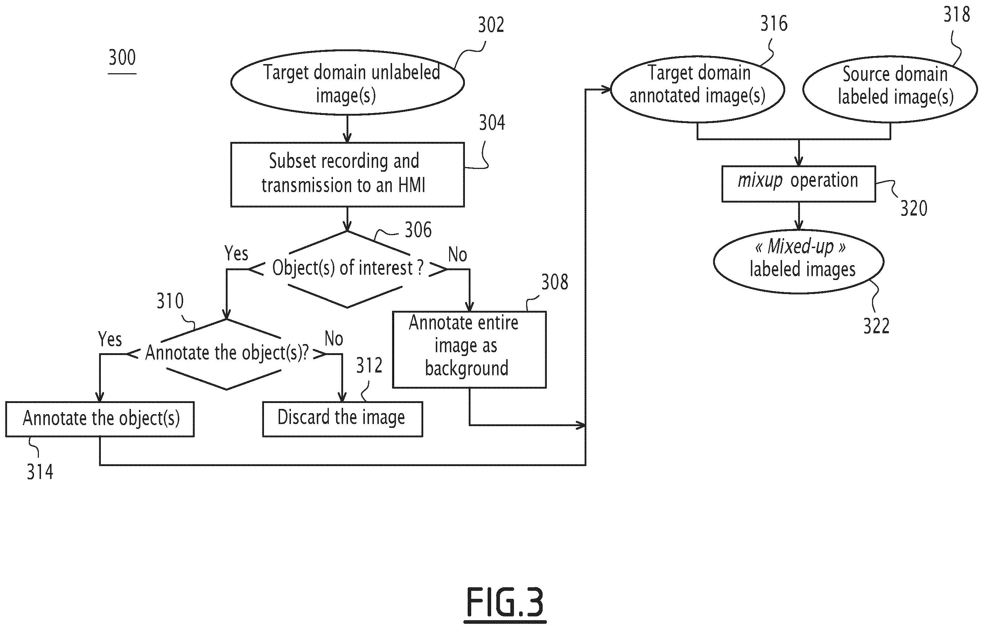

As further described with reference to figure 3, the process allows the user to annotate on-the-fly the set of selected target domain unlabeled images with coarse labels (i.e., bounding box annotations) to provide a set of target domain annotated images 216.

Meanwhile, the process allows retrieving at least one or a few annotated data, i.e. a small set of annotated data, from the source domain labeled images module 218. Annotations can be either pixel-level annotations or bounding-box annotations.

On a next step 220, the process allows performing an iterative interactive *mixup* operation to generate one or a few *mixed-up* labeled training data 222. The *mixup* operation consists in combining annotated image(s) of the source domain 218 with the set of images 216 of the target domain that are coarsely (or weakly) annotated, to obtain resulting augmented mixed-up labeled images 222.

The resulting augmented images 222 are provided in a next step 224 as inputs to the image encoder 206 for features extraction, and the mixed-up labels of the augmented mixed-up images are provided in a step 226 to the classifier 208 for training, i.e. for adapting the few-shot model with the weights issued from the augmented images.

The process allows thus to interactively adapt the weights of the few-shot model operated online during a current inference with the weights issued from the interactive adaptation process 214.

The general process then continues with a resizing step 210 to output a segmentation mask matching the size of any new input image of the target domain.

Going now to figure 3, a process flow 300 for performing a *mixup* operation is described. The *mixup* procedure allows generating augmented images with annotations. The process begins on step 302 on accessing a set of unlabeled images from a target domain, and next on step 304 on transmitting the set of unlabeled images to a computer device configured with an HMI allowing a user to visualize the images and operates the following steps.

Next step 306 allows a user to determine if one or several object(s) of interest is/are present on an image.

If the image does not contain any objects of a predefined class of interest (branch No), the process allows on step 308 the user to label the entire image as a "background image".

If the image contains instance(s) of the predefined class of interest (branch Yes), the process allows on step 310 the user to decide to annotate the image or not.

If the user decides not to annotate the image (branch no), because the user is uncertain or cannot afford the time to annotate all the bounding-boxes, regarding real-time constraints of the operational context, then the process allows the user on step 312 to discard the image.

If the user decides to annotate the image (branch Yes), then the process allows the user on step 314 to coarsely annotate on-the-fly the object(s) with bounding-boxes surrounding each instance of the class of interest.

Thereafter, on step 316, the target domain annotated image(s) and the background image(s) are grouped to form a set of target domain annotated images.

If no user annotation is provided on any of the selected target domain unlabeled image, a resulting set of target domain annotated image(s) may comprise only background images.

The process continues with a *mixup* operation 320, which allows combining the set of target domain annotated image(s) with a set of source domain labeled image(s) to provide on step 322 a resulting set of *mixup* labeled images 322.

*A mixup* labeled image is a weighted average at the pixel level of an annotated image from a source domain, and a set of labeled target images selected from unlabeled target images, where the weights are controlled by a parameter sampled from a known beta distribution. The corresponding annotations are the concatenation of the annotations of the source image and the target image, assuming that each instance is still visible in the resulting generated augmented image.

For example in a context of a segmentation task for power lines and under a domain shift due to the use of a fisheye camera on the target domain data, having a source image containing visible power lines and a target image not containing any visible power line, it comes that by mixing the source and the target image according to the *mixup* operation of the present invention, all the cables that are visible in the source image become also visible in the generated augmented image.

The inventors have obtained improved results over prior art techniques, for example in the scenario of power lines segmentation, with only dozens of images acquired from a target domain that did not contain any visible power line. After using the *mixup* technique of the invention as an adaptation, it has been demonstrated that the model predictions on this target domain are significantly improved.

The interactive *mixup* process is iterated during a real operation, by processing new target unlabeled images. Overall, this interactive image augmentation procedure improves generalization and robustness of the segmentation model and improves its performance on unseen data of a target domain.

The general process of the present invention further offers a novel approach for few-shot segmentation with bounding-box annotations.

The few-shot segmentation consists of three main phases. A first phase allows encoding a support set of images to obtain labeled feature maps, wherein a support set refers to a set of annotated images. Concurrently, bounding-box annotations (i.e., coarse labels of the labeled set) are converted into noisy patch-level labels (i.e. noisy feature map-level labels) to exploit them during training. A patch-level label refers to an annotation that assigns a specific class or category to a localized region or patch of an image, rather than to individual pixels or the entire image.

A second phase allows training the few-shot model using the previously obtained labeled feature maps from the support set. The learning algorithm is tailored to address complex backgrounds (backgrounds refer to all image regions not belonging to the class of interest) and to manage noisy support labels, i.e. noisy patch-level labels resulting from coarse bounding-box annotations.

A third phase, operated during inference, allows encoding a query image (i.e. a real captured target image) and allows using the classifier to generate predictions in the latent space, which are then converted into a segmentation mask matching the input image size.

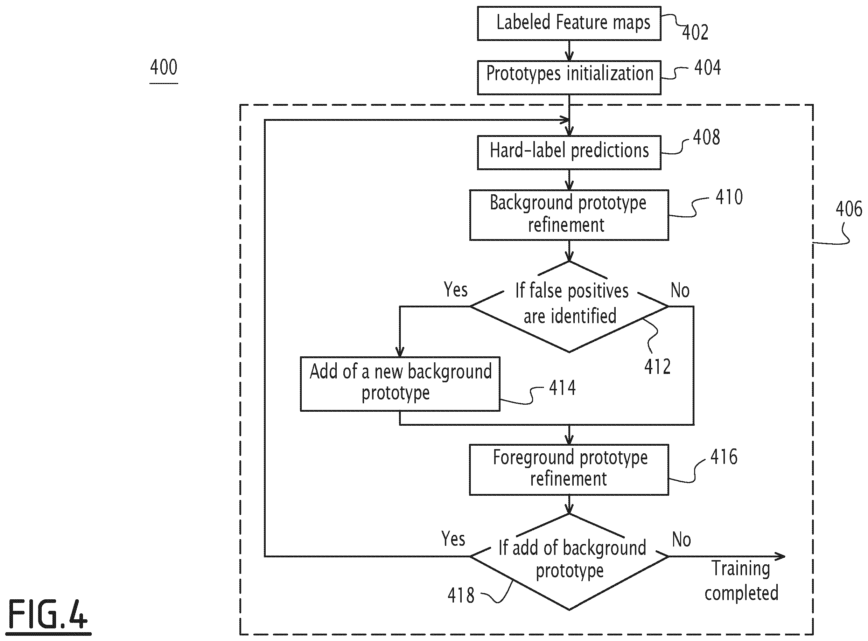

Going now to figure 4, a flow chart detailing steps of a few-shot training process 400 performed during a learning phase, in accordance with an embodiment of the present invention, is now described.

The process begins after encoding input images using a pre-trained encoder to extract spatial feature maps for each image (initial step 402). The pre-trained encoder is used to map input images into spatial feature maps. Each spatial feature map can be represented as a set of feature vectors. Each feature vector can be considered as the embedding of a corresponding patch in the input image.

Given bounding-box annotations in a support set, the process allows directly generating patch-level labels that are suitable for training the classifier in the latent space. Each patch of the image from the support set has a binary label, i.e. a patch label. The patch label is set to 'one' (noisy positive) if most pixels in the patch are inside any bounding box annotation, and it is set to 'zero' (true negative) otherwise. As each patch label is directly associated with the corresponding feature vector in the latent space, this conversion enables the creation of a labeled support set in the latent space (i.e. feature vector space).

Next phase is to train the classifier on this support set in the latent space.

In a preferred embodiment, the classifier is a prototype mixture-based classifier, noted "ProMi", which consists of a set of prototypes, composed of one foreground class prototype, and a set of background class prototypes.

Generally, the prototype mixture-based classifier (ProMi) operates in the latent space using a prototype-based strategy and cosine similarity for classifying the feature vectors. Given a class of interest, one prototype for the foreground (class of interest) and one prototype for the background are initially computed. However, these initial prototypes may be suboptimal due to noisy bounding box annotations affecting the foreground and the complex, mixture nature of the background. To address this, ProMi iteratively adds new background prototypes, up to a predefined maximum, while simultaneously refining the existing prototypes.

On step 404, the process operates a prototype initialization with an initial set of prototypes composed of one foreground prototype and one background prototype. The prototypes are computed as means of the feature vectors associated with the respective classes. The computation is done over all patches of images in the support set, i.e. over all feature vectors.

The process then enters an iteration computation 406 to refine the prototypes (background and foreground), and improve classification accuracy.

On next step 408, the process allows the classifier calculating a cosine similarity between each feature vector and all current prototypes. In an embodiment, a L2-normalization is applied to all feature vectors to ensure they have unit length for the cosine similarity measure. Hard-label predictions are then obtained by taking the argmax (argument of the maxima) of these similarities.

Next step 410 allows an update of background prototypes. Each existing background prototype is refined as a mean of the background feature vectors assigned to it. This ensures that distinct prototypes capture different background characteristics.

The process then allows on step 412 to determine if false positives are identified, i.e. feature vectors predicted as foreground but belonging to the background.

In case of false positives (branch Yes), the process allows on next step 414 to estimate a new background prototype. The new background corresponds to the mean of all feature vectors identified as false positives during the current iteration. The new background prototype is added to the existing set of background prototypes. And the process goes to a next step 416.

In case no false positives are identified (branch No), the process continues with step 416 to refine a foreground prototype.

In an embodiment, a foreground prototype is refined as the mean of the feature vectors that are predicted as positive and that correspond to patches labeled as foreground. Advantageously, the foreground refinement step improves a foreground prototype to better capture the distribution of a class of interest despite the noise in foreground annotations of a support set.

The process continues with a step 418 to determine if a background prototype has been added during the current iteration. In case (branch Yes), the process loops back to step 408, otherwise (no additional false positives are detected; branch No), the process ends the training phase of the few-shot classifier.

In an embodiment, the prototype-based iterative process continues until a maximum number of prototypes K (a predefined hyperparameter) is reached. The number of background prototypes starts at iteration number k = 1 and increases iteratively during the refinement process until it reaches a pre-defined maximum *k = K.*

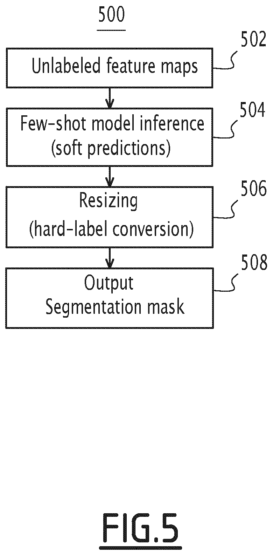

Going now to figure 5, a flow chart detailing steps of a few-shot inference process 500 performed during an inference phase in accordance with an embodiment of the present invention, is now described.

During inference, each query image (i.e. target camera frame to analyze) is first encoded using a pre-trained encoder, producing a spatial feature map. The feature map is represented as a set of L2-normalized feature vectors (step 502).

The feature vectors are input in a next step 504 to a prototype-based classifier, which uses a set of prototypes (background and foreground prototypes) previously estimated on a support set during a training phase. The classifier provides predictions by computing cosine similarities between each feature vector and the prototypes. These predictions, known as logits, represent the scores for each class and are spatially organized into a two-dimensional prediction map.

On a next step 506, the prediction map is resized using linear interpolation to match the original width and height of the query image.

On a next step 508, a "argmax" function is applied on the resized prediction map to obtain hard-label predictions, such that the prototype index with the highest similarity for each pixel is determined.

Finally, a pixel is classified as background if the highest similarity index corresponds to any of the background prototypes, or is classified as foreground if it matches the foreground prototype.

This process allows generating, for each query image, a pixel-level binary segmentation mask, indicating foreground and background pixel predictions.

It has been described an embodiment to solve a domain adaptation shift during deployment, by combining a prototype-based mixture with a novel interactive *mixup-based* data augmentation strategy.

The few-shot learning algorithm of the invention can capture complex background distributions because it uses a mixture of prototypes instead of one. In addition, it is robust to coarse bounding-box annotations because it automatically refines all its prototypes.

The iterative interactive *mixup* strategy is effective to deal with domain shift because it enables to project into same augmented images, annotated visual patterns of the instances of a class of interest that are visible in source data, and background visual patterns that are visible in data from a target domain of interest at the same time.

To summarize, the main advantages of the present invention are:
- An efficient adaptation and interaction: the proposed solution enables direct fine-tuning and adaptation of a segmentation model during deployment. User can interact with the segmentation model interactively to refine the segmentation results.
- Time efficient annotations: The segmentation model leverages coarse annotations, which significantly reduces the complexity and cost of data labeling. Furthermore, the proposed solution requires few training data for adaptation (i.e., less than 5 examples). A user in the loop can rapidly annotate the training data, since the solution needs only bounding-box annotations instead of labor-intensive pixel-level annotations. In addition, human operator interventions are also time-efficient as they do not imply any time-consuming pixel-level annotation to address the segmentation task of interest.

- The solution is efficient in terms of computational cost, because the few-shot learning algorithm is composed of a low-computational demanding single linear layer, that only requires a single training iteration to be effective.
- Adaptability to the application domain: Since the proposed solution relies on coarse annotations, it offers a practical alternative in scenarios where detailed fine-grained labels are not available or difficult to obtain.
- Generalization to new object classes: the proposed solution can effectively train or adapt without the need to encounter any target object classes during the online fine-tuning phase. The invention allows better handling the trade-off between generalization to new domains and fast adaptation to new classes of objects of interest with coarse annotations simultaneously.

## Claims

1. A computer-implemented method for image segmentation of an input image of a target domain, the method comprising:
- an inference phase to output an image segmentation mask of the input image, the inference phase comprising at least an encoding step performed by a pre-trained encoder, and a classification step performed by a few-shot classifier operating a few-shot model, the few-shot model being trained during a training phase on a set of source labeled images;
- an adaptation phase to adapt the few-shot model online during the inference phase, the adaptation using a set of mixed-up images obtained by combining selected input images of the target domain coarsely annotated with labeled images of the source domain.

2. The method of claim 1 wherein the online adaptation phase comprising:
- determining the few-shot model is to be adapted to the target domain;
- recording a set of unlabeled input images of the target domain captured online;
- coarsely annotating one or several unlabeled input images;
- combining the annotated input images with labeled images of the source domain to generate mixed-up labeled images;
- providing the mixed-up images to the encoder for features extraction and the mixed-up labels to the few-shot classifier, thereby adapting the few-shot model.

3. The method of claim 2 wherein the annotating step comprising:
- determining if obstacles of interest are present on an image of the set of unlabeled input images; and
- annotating the image with coarse bounding boxes when obstacles of interest are encountered, otherwise annotating the image as background scene.

4. The method of claim 2 or 3 wherein the annotating step is performed by a user from a human man machine interface.

5. The method of any one of previous claims further comprising a training phase for training the few-shot model, the training phase comprising:
- encoding input images using a pre-trained encoder to extract spatial feature maps for each image;
- initializing one background prototype and one foreground prototype, a background prototype being a mean prototype vector representing a background class of interest, a foreground prototype being a mean prototype vector representing a foreground class of interest;
- performing an iteration computation to refine the background and the foreground prototypes until a maximum number of prototypes is reached, thereby providing a set of background and foreground prototypes.

6. The method of any one of previous claims wherein the inference phase further comprising a resizing step to output an image segmentation mask matching the size of the input image of the target domain.

7. The method of previous claim wherein the inference phase comprising:
- encoding each input image using the pre-trained encoder for producing a spatial feature map represented as a set of L2-normalized feature vectors;
- inputting each feature vectors to the classifier to provide predictions by computing cosine similarities between each feature vector and the set of background and foreground prototypes, wherein the predictions representing scores for each class are spatially organized into a two-dimensional prediction map;
- resizing the prediction map using linear interpolation to match the original width and height of the input image; and
- applying a argmax function on the resized prediction map to obtain hard-label predictions, such that a prototype index with a highest similarity for each pixel is determined.

8. A computer-implemented method for training a few-shot classifier with a set of labeled features maps extracted from a set of images, wherein the training provides one foreground prototype and several background prototypes for a class of interest.

9. A non-transitory computer readable medium comprising instructions for image segmentation of an input image of a target domain that, when executed by at least one processor, cause a computing device to:
- perform an inference phase to output an image segmentation mask of the input image, the inference phase comprising at least an encoding step performed by a pre-trained encoder, and a classification step performed by a few-shot classifier operating a few-shot model, the few-shot model being trained during a training phase on a set of source labeled images;
- perform an adaptation phase to adapt the few-shot model online during the inference phase, the adaptation using a set of mixed-up images obtained by combining selected input images of the target domain coarsely annotated with labeled images of the source domain.

10. A system for image segmentation of an input image of a target domain, comprising:
- at least one memory for storing instructions; and
- processor circuitry to execute the instructions to:
- perform an inference phase to output an image segmentation mask of the input image, the inference phase comprising at least an encoding step performed by a pre-trained encoder, and a classification step performed by a few-shot classifier operating a few-shot model, the few-shot model being trained during a training phase on a set of source labeled images;
- perform an adaptation phase to adapt the few-shot model online during the inference phase, the adaptation using a set of mixed-up images obtained by combining selected input images of the target domain coarsely annotated with labeled images of the source domain.

## Amended claims

### Amended claims in accordance with Rule 137(2) EPC.

1. A computer-implemented method for image segmentation of an input image of a target domain, the method comprising:
- an inference phase to output an image segmentation mask of the input image, the inference phase comprising at least an encoding step performed by a pre-trained encoder, and a classification step performed by a few-shot classifier operating a few-shot model, the few-shot model being trained during a training phase on a set of source labeled images;
- an adaptation phase to adapt the few-shot model online during the inference phase, the adaptation using a set of mixed-up images obtained by combining selected input images of the target domain coarsely annotated with labeled images of a source domain, the coarsely annotated images being images with bounding-box annotations;
the mixed-up images being provided as inputs to the pre-trained encoder for features extraction, and mixed-up labels of the mixed-up images being provided to the few-shot classifier for training.

2. The method of claim 1 wherein the online adaptation phase comprising:
- determining the few-shot model is to be adapted to the target domain;
- recording a set of unlabeled input images of the target domain captured online;
- coarsely annotating one or several unlabeled input images;
- combining the annotated input images with labeled images of the source domain to generate mixed-up labeled images;
- providing the mixed-up images to the encoder for features extraction and the mixed-up labels to the few-shot classifier, thereby adapting the few-shot model.

3. The method of claim 2 wherein the annotating step comprising:
- determining if obstacles of interest are present on an image of the set of unlabeled input images; and
- annotating the image with coarse bounding boxes when obstacles of interest are encountered, otherwise annotating the image as background scene.

4. The method of claim 2 or 3 wherein the annotating step is performed by a user from a human man machine interface.

5. The method of any one of previous claims further comprising a training phase for training the few-shot model, the training phase comprising:
- encoding input images using a pre-trained encoder to extract spatial feature maps for each image;
- initializing one background prototype and one foreground prototype, a background prototype being a mean prototype vector representing a background class of interest, a foreground prototype being a mean prototype vector representing a foreground class of interest;
- performing an iteration computation to refine the background and the foreground prototypes until a maximum number of prototypes is reached, thereby providing a set of background and foreground prototypes.

6. The method of any one of previous claims wherein the inference phase further comprising a resizing step to output an image segmentation mask matching the size of the input image of the target domain.

7. The method of previous claim wherein the inference phase comprising:
- encoding each input image using the pre-trained encoder for producing a spatial feature map represented as a set of L2-normalized feature vectors;
- inputting each feature vectors to the classifier to provide predictions by computing cosine similarities between each feature vector and the set of background and foreground prototypes, wherein the predictions representing scores for each class are spatially organized into a two-dimensional prediction map;
- resizing the prediction map using linear interpolation to match the original width and height of the input image; and
- applying a argmax function on the resized prediction map to obtain hard-label predictions, such that a prototype index with a highest similarity for each pixel is determined.

8. A computer-implemented method for training a few-shot classifier with a set of labeled features maps extracted from a set of images, wherein the training provides one foreground prototype and several background prototypes for a class of interest.

9. A non-transitory computer readable medium comprising instructions for image segmentation of an input image of a target domain that, when executed by at least one processor, cause a computing device to:
- perform an inference phase to output an image segmentation mask of the input image, the inference phase comprising at least an encoding step performed by a pre-trained encoder, and a classification step performed by a few-shot classifier operating a few-shot model, the few-shot model being trained during a training phase on a set of source labeled images;
- perform an adaptation phase to adapt the few-shot model online during the inference phase, the adaptation using a set of mixed-up images obtained by combining selected input images of the target domain coarsely annotated with labeled images of the source domain.

10. A system for image segmentation of an input image of a target domain, comprising:
- at least one memory for storing instructions; and
- processor circuitry to execute the instructions to:
- perform an inference phase to output an image segmentation mask of the input image, the inference phase comprising at least an encoding step performed by a pre-trained encoder, and a classification step performed by a few-shot classifier operating a few-shot model, the few-shot model being trained during a training phase on a set of source labeled images;
- perform an adaptation phase to adapt the few-shot model online during the inference phase, the adaptation using a set of mixed-up images obtained by combining selected input images of the target domain coarsely annotated with labeled images of a source domain, the coarsely annotated images being images with bounding-box annotations;
the mixed-up images being provided as inputs to the pre-trained encoder for features extraction, and mixed-up labels of the mixed-up images being provided to the few-shot classifier for training.
